# EUROPÄISCHE PATENTSCHRIFT

(11) **EP 3 219 954 B1**
(45) Veröffentlichungstag und Bekanntmachung des Hinweises auf die Patenterteilung: **06.06.2018**
(21) Anmeldenummer: 17158334.7
(22) Anmeldetag: 28.02.2017
(51) Int. Cl.: F02B 75/04, F16C 7/06, F16K 11/07

(54) **UMSCHALTVENTIL ZUM STEUERN EINES HYDRAULIKFLÜSSIGKEITSSTROMS UND PLEUEL MIT EINEM UMSCHALTVENTIL**
SWITCHING VALVE FOR CONTROLLING A HYDRAULIC LIQUID STREAM AND CONNECTING ROD WITH A SWITCHING VALVE
SOUPAPE DE COMMUTATION DESTINÉE À RÉGULER UN FLUX DE LIQUIDE HYDRAULIQUE ET BIELLE COMPRENANT UNE SOUPAPE DE COMMUTATION

(30) Priorität: 14.03.2016 DE 102016104619; 22.09.2016 DE 102016117874
(43) Veröffentlichungstag der Anmeldung: 20.09.2017
(73) Patentinhaber: ECO Holding 1 GmbH, 97828 Marktheidenfeld (DE)
(72) Erfinder: Mudra, Alexander, 02826 Görlitz (DE); Schulze, Dietmar, 35516 Münzenberg (DE)

(56) Entgegenhaltungen:
- DE-A1-102005 055 199
- DE-A1-102012 112 461
- DE-A1-102013 111 617
- DE-A1-102014 106 715
- US-A1- 2015 152 794

## Beschreibung

### Technisches Gebiet

Die Erfindung betrifft ein Umschaltventil, insbesondere für ein Pleuel für eine Brennkraftmaschine mit variabler Verdichtung mit einer Exzenter-Verstelleinrichtung zur Verstellung einer effektiven Pleuelstangenlänge. Ferner betrifft die Erfindung ein Pleuel mit einem derartigen Umschaltventil.

### Stand der Technik

Bei Brennkraftmaschinen wirkt sich ein hohes Verdichtungsverhältnis positiv auf den Wirkungsgrad der Brennkraftmaschine aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuelstangenlänge bekannt, welche mit Hilfe von hydraulisch oder mechanisch betätigbaren Umschaltventilen eine Exzenter-Verstelleinrichtung eines Pleuels betätigen.

Ein gattungsgemäßes Umschaltventil ist beispielsweise aus der DE 10 2012 112 461 A1 zu entnehmen. Ein Abgriffselement des darin beschriebenen Umschaltelements weist eine T-förmige Nut auf, über welche Ablaufleitungen mit einer Versorgungsleitung verbindbar sind. Angeordnet ist das bekannte Umschaltventil in einem Pleuelkörperbereich oberhalb eines Hublagerauges.

### Offenbarung der Erfindung

Insbesondere bei der Verwendung des Pleuels in einem Reihenmotor ist diese Anordnung aus Bauraumgründen nachteilig. Daher ist es Aufgabe der Erfindung, ein Umschaltventil und ein Pleuel mit einem Umschaltventil zu schaffen, welches zur Anordnung an einem Pleuel für einen Reihenmotor geeignet ist.

Die vorgenannte Aufgabe wird nach einem Aspekt der Erfindung gelöst mit den Merkmalen des unabhängigen Anspruchs.

Günstige Ausgestaltungen und Vorteile der Erfindung ergeben sich aus den weiteren Ansprüchen, der Beschreibung und der Zeichnung.

Es wird ein Umschaltventil zum Steuern eines Hydraulikflüssigkeitsstroms vorgeschlagen, mit einem Abgriffselement, welches in einem Ventilgehäuse angeordnet und wahlweise in eine erste Schaltstellung oder eine zweite Schaltstellung verlagerbar ist. Dabei ist in der ersten Schaltstellung ein erster Hydraulikanschluss mit einem Versorgungsanschluss und in der zweiten Schaltstellung ein zweiter Hydraulikanschluss mit dem Versorgungsanschluss verbunden.

Erfindungsgemäß sind im Abgriffselement wenigstens zwei Durchgangsbohrungen vorgesehen, die sich durch das Abgriffselement erstrecken, wobei in der ersten Schaltstellung durch eine der Durchgangsbohrungen eine Fluidverbindung zwischen dem ersten Hydraulikanschluss und dem Versorgungsanschluss und in der zweiten Schaltstellung durch eine andere der Durchgangsbohrungen eine Fluidverbindung zwischen dem zweiten Hydraulikanschluss und dem Versorgungsanschluss hergestellt ist.

Ein Vorteil des erfindungsgemäßen Umschaltventils ist, dass das Umschaltventil unterhalb eines Pleuels angeordnet werden kann, wie es aus Bauraumgründen bei einem Reihenmotor günstig ist. So werden Bauraumkollisionen mit Massenausgleichsgewichten der Kurbelwelle vermieden. Gemäß der Erfindung weist das Abgriffselement des Umschaltventils Durchgangsbohrungen auf, welche je nach Schaltstellung eine Fluidverbindung zwischen Hydraulikanschlüssen, die beispielsweise mit Ablaufleitungen oder Zulaufleitungen im Pleuelkörper und/oder Pleueldeckel verbunden sind, und dem Versorgungsanschluss des Umschaltventils herstellen. Dadurch kann auf eine T-förmige Tangentialnut wie im Stand der Technik beschrieben, verzichtet werden. Da zwei Durchgangsbohrungen vorhanden sind, können so gezielt jeweils ein erster Hydraulikflüssigkeitsanschluss des Umschaltventils und ein zweiter Hydraulikflüssigkeitsanschluss des Umschaltventils getrennt mit dem Versorgungsanschluss des Umschaltventils verbunden werden, je nach Schaltstellung des Abgriffselements.

Es ist so möglich, das erfindungsgemäße Umschaltventil als anschraubbaren Adapter an dem Pleueldeckel vorzusehen, wie es aus Bauraumgründen bei Verwendung des Pleuels in einem Reihenmotor vorteilhaft ist. Ein weiterer Vorteil ist, dass das Umschaltventil so getrennt vor der Montage an einem Pleuel getestet werden kann. Da so auch genügend Bauraum für das Umschaltventil zur Verfügung steht, kann für die Realisierung der Rastfunktion auf eine platzsparende Blattfeder verzichtet werden und stattdessen eine robuste Druckfeder eingesetzt werden. Auch kann so eine einfache Kugel als Rastelement verwendet werden, so dass ein komplexes und störanfälliges Rastelement vermieden werden kann. Die Dichtstrecken im Abgriffselement sind wesentlich länger als bei der Anordnung mit einer T-förmigen Nut, da durch die Durchgangsbohrungen weniger Dichtfläche verloren geht. Konzeptbedingt werden günstigerweise zwei Durchgangsbohrungen vorgesehen. Ein solches Abgriffselement kann vorteilhaft in unterschiedlichen mechanischen Umschaltventilen eingesetzt werden.

Gemäß einer vorteilhaften Ausgestaltung können im Ventilgehäuse wenigstens zwei Ablaufleitungen sowie wenigstens zwei Verbindungsleitungen ausgebildet sein, wobei in der ersten Schaltstellung die erste Ablaufleitung über eine der Durchgangsbohrungen mit der ersten Verbindungsleitung und in der zweiten Schaltstellung die zweite Ablaufleitung über eine andere der Durchgangsbohrungen mit der zweiten Verbindungsleitung verbindbar sein kann. Auf diese Weise lässt sich gezielt, je nach Schaltstellung, eine Fluidverbindung zwischen der ersten Ablaufleitung und der ersten Verbindungsleitung herstellen, während die zweite Ablaufleitung und die zweite Verbindungsleitung gesperrt sind, sowie eine Fluidverbindung zwischen der zweiten Ablaufleitung und der zweiten Verbindungsleitung herstellen, während andererseits die erste Ablaufleitung und die erste Verbindungsleitung gesperrt sind. Dadurch kann ein sehr sicheres Schaltverhalten des Umschaltventils günstig realisiert werden.

Gemäß einer vorteilhaften Ausgestaltung können die Durchgangsbohrungen axial versetzt in dem Abgriffselement angeordnet sein und sich diametral durch das Abgriffselement erstrecken. Auf einfache Weise können so Durchgangsbohrungen durch den Durchmesser des Abgriffselements vorgesehen werden, die jeweils Hydraulikleitungen auf beiden Seiten des Abgriffselements miteinander verbinden oder sperren können. Die Fluidverbindung kann je nach Durchgangsbohrung getrennt hergestellt oder gesperrt werden. Ein solches Abgriffselement ist auch kostengünstig herzustellen.

Gemäß einer vorteilhaften Ausgestaltung kann das Ventilgehäuse als Adapter bestimmungsgemäß zur Anordnung an einem Pleueldeckel eines Pleuels vorgesehen sein. Es ist so möglich, das erfindungsgemäße Umschaltventil als anschraubbaren Adapter an dem Pleueldeckel vorzusehen, wie es aus Bauraumgründen bei Verwendung des Pleuels in einem Reihenmotor vorteilhaft ist. Ein weiterer Vorteil ist, dass das Umschaltventil so getrennt vor der Montage an einem Pleuel getestet werden kann. Bei Bedarf kann das Umschaltventil so auch leicht getauscht werden und durch ein anderes Umschaltventil ersetzt werden, das möglicherweise nicht mechanisch, sondern hydraulisch betätigbar sein kann.

Gemäß einer vorteilhaften Ausgestaltung kann das Ventilgehäuse Dichtflächen und/oder Dichtelemente so aufweisen, dass die Verbindungsleitungen bei einer bestimmungsgemäßen Montage des Ventilgehäuses an einem Pleueldeckel abdichtbar sind. Durch die Adapterlösung für das Umschaltventil ist es möglich, einfache Dichtelemente wie O-Ringe und glatte Dichtflächen vorzusehen, mit denen die Hydraulikanschlüsse des Umschaltventils bei Montage an dem Pleueldeckel abgedichtet werden können. Da das Ventilgehäuse über Schrauben an den Pleueldeckel angepresst werden kann, kann auf diese Weise eine sichere und dauerhafte Abdichtung der Hydraulikanschlüsse erreicht werden.

Gemäß einer vorteilhaften Ausgestaltung kann zwischen den Verbindungsleitungen und dem Abgriffselement jeweils eine Drosselstelle, insbesondere eine Drosselbohrung, vorgesehen sein. Eine solche Drosselstelle in der Hydraulikleitung vor dem Abgriffselement kann vorteilhaft vorgesehen werden, um so eine geringere Leckage an Hydraulikflüssigkeit im Umschaltventil zu erreichen, da eine Umfangslänge der Öffnungen der Hydraulikleitungen an dem Abgriffselement verringert werden kann. Eine geringere Spaltbreite resultiert so in einer geringeren Leckage an Hydraulikflüssigkeit am Übergang zwischen Hydraulikleitung und Durchgangsbohrung.

Gemäß einer vorteilhaften Ausgestaltung können die Ablaufleitungen einseitig mit einem Dichtelement abgedichtet sein, wobei insbesondere die Verbindungsleitungen bei über die jeweilige Durchgangsbohrung hergestellter Fluidverbindung über das jeweilige Dichtelement nach außen abgedichtet sein können. Werden Ablaufleitungen und/oder Verbindungsleitungen der Einfachheit halber mit Stichbohrungen im Ventilgehäuse hergestellt, so kann es zweckmäßig sein, eine Öffnung zur Außenseite des Ventilgehäuses mit einseitig angeordneten Dichtelementen zu verschließen, damit keine Leckage nach außen auftreten kann. Beispielsweise könnten auch Madenschrauben mit Teflonbeschichtung als Dichtelemente vorgesehen werden. Auf diese Weise kann die Herstellung des Ventilgehäuses vereinfacht werden und ein kompaktes Design des Umschaltventils umgesetzt werden.

Gemäß einer vorteilhaften Ausgestaltung kann das Abgriffselement mittels einer Rastverbindung in den beiden Schaltstellungen arretierbar sein, wobei insbesondere ein federbeaufschlagtes Rastelement in den beiden Schaltstellungen mit im Abgriffselement ausgebildeten Rastnuten zusammenwirken kann. Beispielsweise kann als Rastelement eine mit einer Druckfeder beaufschlagte Kugel vorgesehen werden, wobei im Abgriffselement zwei Vertiefungen auf der Länge des Abgriffselements eingebracht sind, in welche die Kugel einrasten kann. So kann bei Verschieben des Abgriffselements das Rastelement von einer Raststellung in die andere Raststellung gebracht werden, so dass das Abgriffselement in den beiden Schaltstellungen arretiert werden kann.

Gemäß einer vorteilhaften Ausgestaltung kann das Rastelement als Kugel ausgebildet sein, welche mittels einer Federkraft einer Feder beaufschlagbar ist, wobei die Feder nach bestimmungsgemäßer Montage des Ventilgehäuses an einem Pleueldeckel wenigstens teilweise in einer Ausnehmung des Pleueldeckels geführt vorgesehen sein kann. Eine Kugel mit einer Druckfeder stellt ein einfaches Rastelement dar, welches vorteilhaft wenig störanfällig ist und eine sichere Schaltfunktion auf Dauer sicherstellen kann. Dadurch, dass die Feder in eine Ausnehmung im Pleueldeckel hineinragen kann, lässt sich die Montage des Umschaltventils einfacher gestalten. Kugel und Druckfeder brauchen so erst bei Montage am Pleueldeckel montiert zu werden. Auch lässt sich durch eine solche Anordnung Bauraum für die Druckfeder im Ventilgehäuse sparen, da die Feder teilweise im Pleueldeckel versenkt angeordnet ist.

Gemäß einer vorteilhaften Ausgestaltung kann das Ventilgehäuse eine axial begrenzte Nut aufweisen, in welcher ein Anschlagelement des Abgriffselements zur Begrenzung des Schaltweges angeordnet ist. Ein solches Anschlagelement stellt eine bewährte Möglichkeit dar, den Schaltweg des Abgriffselements zu begrenzen. Damit kann die Schaltfunktion mit den beiden Schaltstellungen zuverlässig gewährleistet werden.

Gemäß einer vorteilhaften Ausgestaltung können die Hydraulikanschlüsse wenigstens teilweise durch Ausnehmungen gebildet sein, welche zur Aufnahme von Befestigungsschrauben zur bestimmungsgemäßen Befestigung des Ventilgehäuses an einem Pleuel vorgesehen sind. Auf diese Weise kann Bauraum für die Hydraulikleitungen im Ventilgehäuse günstig gestaltet werden, da so Bohrungen für die Aufnahme der Schrauben eine doppelte Funktion erfüllen können. Dadurch lässt sich die Herstellung des Ventilgehäuses kostengünstig gestalten.

Nach einem weiteren Aspekt der Erfindung wird ein Pleuel für eine Brennkraftmaschine mit variabler Verdichtung mit einer Exzenter-Verstelleinrichtung zur Verstellung einer effektiven Pleuelstangenlänge und einem Umschaltventil vorgeschlagen. Erfindungsgemäß ist dabei ein Verstellweg der Exzenter-Verstelleinrichtung mittels des Umschaltventils verstellbar. Die Exzenter-Verstelleinrichtung weist vorteilhaft einen mit einem Exzenterhebel zusammenwirkenden Exzenter auf, mit zwei Kolben, welche jeweils in einer Hydraulikkammer verschiebbar geführt sind und in welchen an dem Exzenterhebel angreifende Exzenterstangen der Exzenter-Verstelleinrichtung gelagert sind. Durch die Änderung des Verstellwegs wird die effektive Pleuelstangenlänge geändert. Damit kann die Verdichtung einer Brennkraftmaschine gesteuert werden. Ein solcher Pleuel kann so eine Exzenter-Verstelleinrichtung umfassen, die insbesondere zum Schalten der Stellkolben in dem Pleuel für eine variable Verdichtung einer Brennkraftmaschine vorgesehen ist.

Eine Verdrehung der verstellbaren Exzenter-Verstelleinrichtung wird durch Einwirken von Massen- und Lastkräften der Brennkraftmaschine eingeleitet, die bei einem Arbeitstakt der Brennkraftmaschine auf die Exzenter-Verstelleinrichtung wirken. Während eines Arbeitstaktes verändern sich die Wirkungsrichtungen der auf die Exzenter-Verstelleinrichtung wirkenden Kräfte kontinuierlich. Die Drehbewegung oder Verstellbewegung wird durch mit Hydraulikflüssigkeit, insbesondere mit Motoröl, beaufschlagte, im Pleuel integrierte Kolben unterstützt. Die Kolben verhindern ein Rückstellen der Exzenter-Verstelleinrichtung aufgrund variierender Kraftwirkungsrichtungen der auf die Exzenter-Verstelleinrichtung wirkenden Kräfte.

Gemäß einer vorteilhaften Ausgestaltung kann die Exzenter-Verstelleinrichtung wenigstens einen und vorzugsweise zwei Zylinder mit jeweils einem Kolben aufweisen, der in einer Zylinderbohrung verschiebbar geführt und mit einer Stützstange verbunden ist. Dabei können ein Zulauf zum Zuführen von Hydraulikflüssigkeit in die Zylinder sowie ein Ablauf zum Abführen von Hydraulikflüssigkeit von den Zylindern vorgesehen sein. Die Kolben sind in Hydraulikkammern verschiebbar angeordnet und über Hydraulikflüssigkeitsleitungen mit Hydraulikflüssigkeit beaufschlagt. Diese verhindern dabei ein Rückfließen der Hydraulikflüssigkeit aus den Hydraulikkammern zurück in die Hydraulikflüssigkeitsleitungen. Die mit den Hydraulikkammern verbundenen Hydraulikflüssigkeitsleitungen wirken wenigstens teilweise mit dem erfindungsgemäßen Umschaltventil zusammen.

Gemäß einer vorteilhaften Ausgestaltung kann über das Abgriffselement in der ersten Schaltstellung der Ablauf des ersten Zylinders mit einem Hydraulikflüssigkeitskreislauf und in der zweiten Schaltstellung der Ablauf des zweiten Zylinders mit dem Hydraulikflüssigkeitskreislauf verbunden sein. Mit dem erfindungsgemäßen Umschaltventil kann so ein zuverlässige Verstellung der effektiven Pleuelstangenlänge über die Exzenter-Verstelleinrichtung erreicht werden, indem die Abläufe der beiden Zylinder in den beiden Schaltstellungen jeweils über das Abgriffselement mit dem Hydraulikflüssigkeitskreislauf, beispielsweise dem Motorölkreislauf, verbunden werden.

Gemäß einer vorteilhaften Ausgestaltung kann wenigstens auf einem Teil des Umfangs eines Hublagerauges im Bereich des Pleueldeckels eine erste Nut zur Verbindung des Umschaltventils mit dem Hydraulikflüssigkeitskreislauf und/oder im Bereich des Pleuelkörpers eine zweite Nut zur Versorgung des Zulaufs in die Zylinder mit Hydraulikflüssigkeit aus dem Hydraulikflüssigkeitskreislauf vorgesehen sein. Auf diese Weise lassen sich die Hydraulikflüssigkeitsleitungen in dem Pleuel als Zulauf in die Zylinder zuverlässig über die zweite Nut im Bereich des Pleuelkörpers mit Hydraulikflüssigkeit versorgen, während die Hydraulikflüssigkeitsleitungen des Umschaltventils über die erste Nut im Bereich des Pleueldeckels Hydraulikflüssigkeit in den Hydraulikflüssigkeitskreislauf abgeben können.

### Kurze Beschreibung der Zeichnungen

Weitere Vorteile ergeben sich aus der folgenden Zeichnungsbeschreibung. In den Zeichnungen ist ein Ausführungsbeispiel der Erfindung schematisch dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: ein erfindungsgemäßes Pleuel für eine Brennkraftmaschine mit variabler Verdichtung mit montiertem Umschaltventil in Draufsicht;
- Fig. 2: das Pleuel aus Fig. 1 im Längsschnitt;
- Fig. 3: der Pleueldeckel mit Umschaltventil aus Fig. 1 in halbtransparenter Darstellung;
- Fig. 4: ein Umschaltventil nach einem Ausführungsbeispiel der Erfindung in halbtransparenter Darstellung;
- Fig. 5: das Umschaltventil aus Fig. 4 in einem Längsschnitt;
- Fig. 6: das Umschaltventil aus Fig. 4 in einem Querschnitt; und
- Fig. 7: das Umschaltventil aus Fig. 4 in einem weiteren Längsschnitt.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

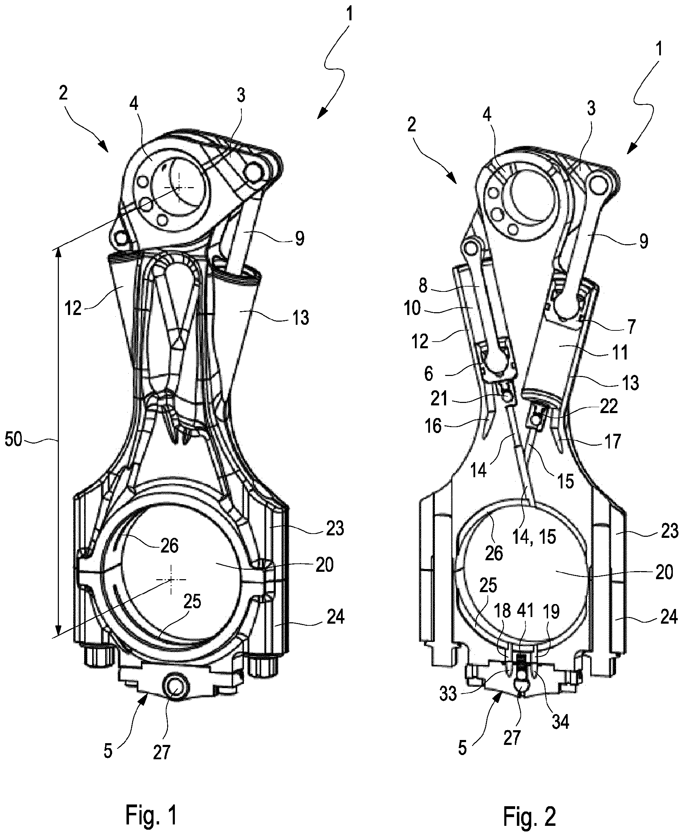

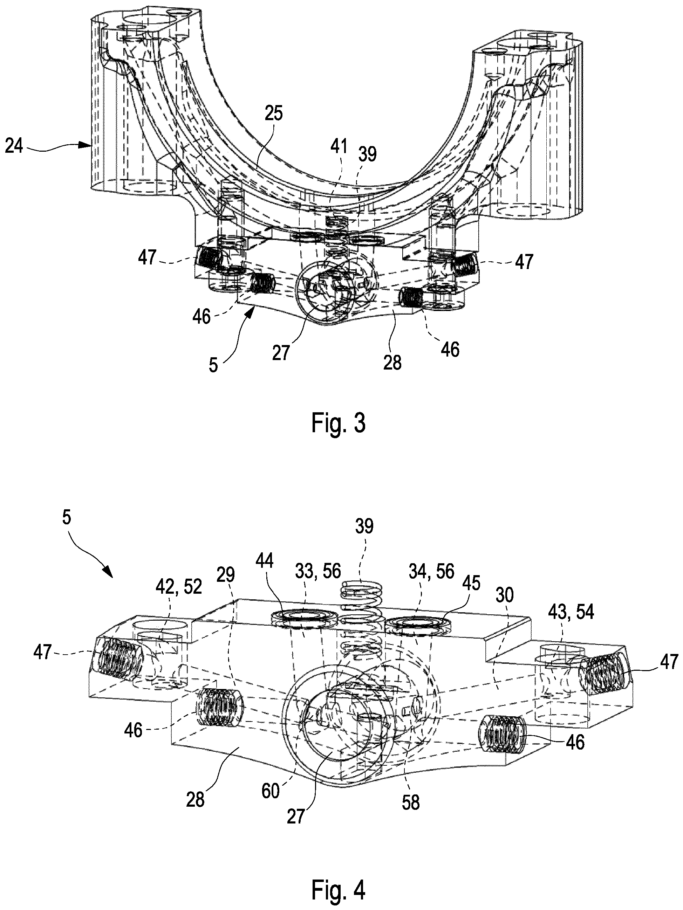

Die Figuren 3 bis 7 zeigen verschiedene Ansichten und Schnitte eines erfindungsgemäßen Umschaltventils 5, welches insbesondere für ein in den Figuren 1 und 2 gezeigtes Pleuel 1 für eine Brennkraftmaschine mit variabler Verdichtung vorgesehen ist. In den Figuren 1 und 2 ist das Pleuel 1 mit als Adapter an einer Unterseite des Pleueldeckels 24 montiertem Umschaltventil 5 dargestellt.

Das Pleuel 1 weist eine Exzenter-Verstelleinrichtung 2 zur Verstellung einer effektiven Pleuelstangenlänge 50 mit einem Exzenter 4 auf, welcher mit einem ein- oder mehrteiligen Exzenterhebel 3 zusammenwirkt. Dabei ist ein Verstellweg der Exzenter-Verstelleinrichtung 2 mittels eines Umschaltventils 5 verstellbar. Die effektive Pleuelstangenlänge 50 ergibt sich als Abstand einer Mittelachse des Hublagerauges 20 von einer Mittelachse einer Bohrung des Exzenters 4 als Pleuellagerauge.

Eine Verdrehung der verstellbaren Exzenter-Verstelleinrichtung 2 wird durch Einwirken von Massen- und Lastkräften der Brennkraftmaschine initiiert, die bei einem Arbeitstakt der Brennkraftmaschine auf die Exzenter-Verstelleinrichtung wirken. Während eines Arbeitstaktes verändern sich die Wirkungsrichtungen der auf die Exzenter-Verstelleinrichtung 2 wirkenden Kräfte kontinuierlich. Die Drehbewegung oder Verstellbewegung wird durch einen oder mehreren mit Hydraulikflüssigkeit, insbesondere mit Motoröl, beaufschlagte, im Pleuel 1 integrierte Kolben 6, 7 unterstützt, bzw. die Kolben 6, 7 verhindern ein Rückstellen der Exzenter-Verstelleinrichtung 2 aufgrund variierender Kraftwirkungsrichtungen der auf die Exzenter-Verstelleinrichtung 2 wirkenden Kräfte. Die Kolben 6, 7 sind mittels Stützstangen 8, 9 mit dem Exzenterhebel 3 wirkverbunden.

Wie Figur 2 zu entnehmen ist, welche einen Längsschnitt des Pleuels 1 zeigt, sind die Kolben 6, 7 jeweils in einer Zylinderbohrung 10, 11 eines Zylinders 12, 13 verschiebbar geführt. Die Zylinder 12, 13 können als separates Bauteil oder einteilig mit einem Pleuelkörper des Pleuels 1 vorgesehen sein. Ebenso ist es grundsätzlich denkbar, das Pleuel 1 mit nur einem Zylinder vorzusehen und einen doppeltwirkenden Kolben einzusetzen.

Die Kolben 6, 7 sind in durch die Zylinderbohrungen 10, 11 gebildete Hydraulikkammern verschiebbar angeordnet und über Zuläufe 14, 15 von dem Hublagerauge 20 aus mit Hydraulikflüssigkeit über Rückschlagventile 21, 22 beaufschlagt. Diese verhindern dabei ein Rückfließen der Hydraulikflüssigkeit aus den Hydraulikkammern zurück in die Hydraulikflüssigkeitsleitungen in eine Lagerschale des Hublagerauges 20 und ermöglichen ein Nachsaugen von Hydraulikflüssigkeit in die Hydraulikkammern. Wie Figur 2 zu entnehmen ist, können die beiden Zuläufe 14, 15 als eine einzige Leitung von dem Hublagerauge 20 ausgehen und sich anschließend jeweils in Richtung Hydraulikkammern aufteilen.

Die Hydraulikkammern sind weiter über nur teilweise zu erkennende Abläufe 16, 17 mit dem Umschaltventil 5 verbunden. Diese Abläufe 16, 17 verlaufen durch einen Pleuelkörper 23 sowie einen daran befestigten Pleueldeckel 24 in Richtung Unterseite des Pleuels 1, an welcher das Umschaltventil 5 als Adapter befestigt ist. Dabei verbinden eine erste und eine zweite Leitung 18, 19 das Umschaltventil 5 mit dem Ölkreislauf (z.B. der Lagerschale) der Brennkraftmaschine. Wie ersichtlich ist hierfür im Pleueldeckel 24 im Bereich des Hublagerauges 20 wenigstens eine Nut 25 vorgesehen. Dagegen ermöglicht eine Nut 26 im Pleuelkörper 23 im Bereich des Hublagerauges 20 das erwähnte Nachsaugen in Richtung Hydraulikkammern.

In Figur 3 ist der Pleueldeckel 24 mit montiertem Umschaltventil 5 in halbtransparenter Darstellung gezeigt, während in Figur 4 das Umschaltventil 5 in halbtransparenter Darstellung vergrößert zu erkennen ist.

Das erfindungsgemäße Umschaltventil 5 weist ein Abgriffselement 27 auf, welches in einem Ventilgehäuse 28 angeordnet und wahlweise in eine erste Schaltstellung S1 oder eine zweite Schaltstellung S2 verlagerbar ist, wobei über das Abgriffselement 27 in der ersten Schaltstellung der Ablauf 16 des ersten Zylinders 12 mit einem Hydraulikflüssigkeitskreislauf und in der zweiten Schaltstellung der Ablauf 17 des zweiten Zylinders 13 mit dem Hydraulikflüssigkeitskreislauf verbunden ist.

Das Abgriffselement 27 weist zwei Durchgangsbohrungen 31, 32 auf, welche in den beiden Schaltstellungen die jeweilige Verbindung zwischen Hydraulikflüssigkeitskreislauf und Ablauf ermöglichen. Dabei ist jeweils eine Ablaufleitung 29, 30 über eine der Durchgangsbohrungen 31, 32 je nach Schaltstellung mit einer im Ventilgehäuse 28 ausgebildeten Verbindungsleitung 33, 34 verbindbar, welche mit den oben erwähnten Leitungen 18, 19 des Pleueldeckels 24 in Verbindung stehen. Die Abdichtung zwischen dem Ventilgehäuse 28 und dem Pleueldeckel 24 erfolgt über Dichtelemente 44, 45 um die Verbindungsleitungen 33, 34. Die Durchgangsbohrungen 31, 32 sind axial versetzt in dem Abgriffselement 27 angeordnet und erstrecken sich diametral durch das Abgriffselement 27.

Zwischen den Verbindungsleitungen 33, 34 und dem Abgriffselement 27 ist jeweils eine Drosselstelle 58, 60, insbesondere eine Drosselbohrung, vorgesehen.

Das Ventilgehäuse 28 ist als Adapter zur Anordnung an dem Pleueldeckel 24 des Pleuels 1 vorgesehen und kann beispielsweise mittels in Ausnehmungen 42, 43 angeordneten Schrauben mit dem Pleueldeckel 24 verschraubt werden.

Das Abgriffselement 27 ist wahlweise in eine erste Schaltstellung S1 oder eine zweite Schaltstellung S2 verlagerbar, wobei in der ersten Schaltstellung S1 ein erster Hydraulikanschluss 52 des Umschaltventils 5 mit einem Versorgungsanschluss 56 des Umschaltventils 5 und in der zweiten Schaltstellung S2 ein zweiter Hydraulikanschluss 54 des Umschaltventils 5 mit dem Versorgungsanschluss 56 des Umschaltventils 5 verbunden ist. Im Abgriffselement 27 sind dafür zwei Durchgangsbohrungen 31, 32 vorgesehen, die sich durch das Abgriffselement 27 erstrecken, wobei in der ersten Schaltstellung S1 eine der Durchgangsbohrungen 31, 32 eine Fluidverbindung zwischen dem ersten Hydraulikanschluss 52 und dem Versorgungsanschluss 56 und in der zweiten Schaltstellung S2 die andere der Durchgangsbohrungen 31, 32 eine Fluidverbindung zwischen dem zweiten Hydraulikanschluss 54 und dem Versorgungsanschluss 56 herstellt.

Die Abläufe 16, 17 der Zylinder 12, 13 münden über die Hydraulikanschlüsse 52, 54 in die Ablaufleitungen 29, 30 des Umschaltventils 5, welche beispielsweise in Figur 4 zu erkennen sind, die das Umschaltventil 5 mit halbtransparentem Ventilgehäuse 28 zeigt. Über das Abgriffselement 27 kann so in der ersten Schaltstellung S1 der Ablauf 16 des ersten Zylinders 12 mit dem Hydraulikflüssigkeitskreislauf und in der zweiten Schaltstellung S2 der Ablauf des zweiten Zylinders 13 mit dem Hydraulikflüssigkeitskreislauf verbunden werden.

Wie insbesondere aus Figur 4 ersichtlich ist, sind die Hydraulikanschlüsse 52, 54 mit den Ablaufleitungen 29, 30 wenigstens teilweise durch Ausnehmungen 42, 43 gebildet, welche sich zur Befestigung des Ventilgehäuses 28 am Pleueldeckel 24 durch das Ventilgehäuse 28 erstrecken und welche zur Aufnahme von Befestigungsschrauben zur bestimmungsgemäßen Befestigung des Ventilgehäuses 28 an einem Pleuel 1 vorgesehen sind.

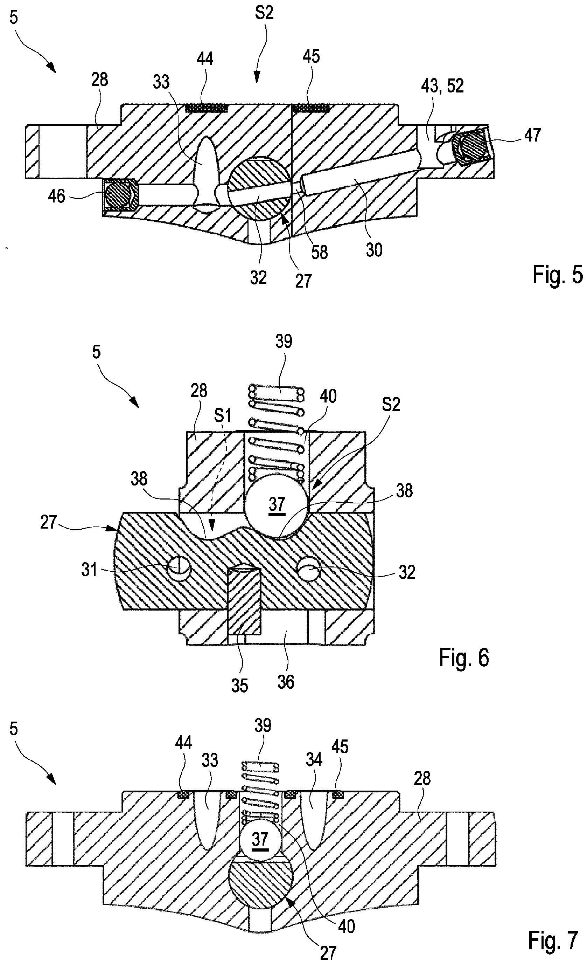

Wie insbesondere aus Figur 5, welche einen Längsschnitt des Umschaltventils 5 zeigt, ersichtlich ist, sind die Leitungen im Ventilgehäuse 28, wie beispielsweise Ablaufleitungen 29, 30, teilweise durch seitliche Bohrungen hergestellt, welche mittels Dichtelementen 46, 47 einseitig wieder verschlossen sind, so dass insbesondere die Verbindungsleitungen 33, 34 bei über die jeweilige Durchgangsbohrung 31, 32 hergestellter Fluidverbindung über das jeweilige Dichtelement 46, 47 nach außen abgedichtet sind. Hierdurch kann die Herstellung der Bohrungen vereinfacht werden und es entsteht ein kompaktes Design des Umschaltventils 5.

Dichtelemente 44, 45, welche zur Abdichtung der Verbindungsleitungen 33, 34 bei der Montage an dem Pleueldeckel 24 dienen und welche als O-Ringe ausgebildet sein können, sind in Figur 5 seitlich angeschnitten zu erkennen.

Das Abgriffselement 27 ist in Figur 5 in der zweiten Schaltstellung S2 dargestellt.

Ein in einer Nut 36 angeordnetes Anschlagelement 35 dient zur Begrenzung des Schaltweges des Abgriffselements 27, wie aus dem in Figur 6 dargestellten Querschnitt des Umschaltventils 5 ersichtlich ist. Das Abgriffselement 27 ist mittels eines federbeaufschlagten Rastelementes 37 in Form einer Kugel in den beiden Schaltstellungen arretierbar, wobei das Rastelement 37 mit im Abgriffselement 27 ausgebildeten Rastnuten 38 zusammenwirkt. Eine die Federkraft aufbringende Feder 39 als Druckfeder ist teilweise in einer Ausnehmung 40 des Ventilgehäuses 28 und zusätzlich nach Montage des Ventilgehäuses 28 teilweise in einer Ausnehmung 41 des Pleueldeckels 24 geführt angeordnet.

Das Abgriffselement 27 ist in Figur 6 ebenfalls in der zweiten Schaltstellung S2 dargestellt. Die zweite Vertiefung der Rastnut 38 stellt die Position für die erste Schaltstellung S1 dar.

Figur 7 zeigt einen weiteren Längsschnitt des Umschaltventils 5, bei dem insbesondere die Dichtelemente 44, 45 zur Abdichtung der Verbindungsleitungen 33, 34 bei einer Montage an dem Pleueldeckel 24 zu erkennen sind. Die Dichtelemente 44, 45 sind beispielsweise O-Ringe, die in Figur 7 im Schnitt zu erkennen sind. Weiter ist das Abgriffselement 27 im Querschnitt mit dem als Kugel realisierten Rastelement 37 zu sehen, welches von der Feder 39 in die Rastnut 38 gepresst wird.

Das erfindungsgemäße Umschaltventil 5 kann durch die Anordnung der Leitungen innerhalb des Ventilgehäuses 28 und der Durchgangsbohrungen 31, 32 an einer Unterseite des Pleuels 1 angeordnet werden. Die Durchgangsbohrungen 31, 32 ermöglichen zudem eine verbesserte Abdichtung, da am Abgriffselement 27 eine größere Dichtfläche zur Verfügung steht.

## Patentansprüche

1. Umschaltventil (5) zum Steuern eines Hydraulikflüssigkeitsstroms, mit einem Abgriffselement (27), welches in einem Ventilgehäuse (28) angeordnet und wahlweise in eine erste Schaltstellung (S1) oder eine zweite Schaltstellung (S2) verlagerbar ist, wobei in der ersten Schaltstellung (S1) ein erster Hydraulikanschluss (52) mit einem Versorgungsanschluss (56) und in der zweiten Schaltstellung (S2) ein zweiter Hydraulikanschluss (54) mit dem Versorgungsanschluss (56) verbunden ist, **dadurch gekennzeichnet, dass** im Abgriffselement (27) wenigstens zwei Durchgangsbohrungen (31, 32) vorgesehen sind, die sich durch das Abgriffselement (27) erstrecken, wobei in der ersten Schaltstellung (S1) durch eine der Durchgangsbohrungen (31, 32) eine Fluidverbindung zwischen dem ersten Hydraulikanschluss (52) und dem Versorgungsanschluss (56) und in der zweiten Schaltstellung (S2) durch eine andere der Durchgangsbohrungen (31, 32) eine Fluidverbindung zwischen dem zweiten Hydraulikanschluss (54) und dem Versorgungsanschluss (56) hergestellt ist.

2. Umschaltventil nach Anspruch 1, **dadurch gekennzeichnet, dass** im Ventilgehäuse (28) wenigstens zwei Ablaufleitungen (29, 30) sowie wenigstens zwei Verbindungsleitungen (33, 34) ausgebildet sind, wobei in der ersten Schaltstellung (S1) die erste Ablaufleitung (29) über eine der Durchgangsbohrungen (31, 32) mit der ersten Verbindungsleitung (33) und in der zweiten Schaltstellung (S2) die zweite Ablaufleitung (30) über eine andere der Durchgangsbohrungen (31, 32) mit der zweiten Verbindungsleitung (34) verbindbar ist.

3. Umschaltventil nach Anspruch 1 oder 2, **dadurch gekennzeichnet, dass** die Durchgangsbohrungen (31, 32) axial versetzt in dem Abgriffselement (27) angeordnet sind und sich diametral durch das Abgriffselement (27) erstrecken.

4. Umschaltventil nach einem der vorangegangenen Ansprüche, **dadurch gekennzeichnet, dass** das Ventilgehäuse (28) als Adapter bestimmungsgemäß zur Anordnung an einem Pleueldeckel (24) eines Pleuels (1) vorgesehen ist.

5. Umschaltventil nach einem der Ansprüche 2 bis 4, **dadurch gekennzeichnet, dass** das Ventilgehäuse (28) Dichtflächen und/oder Dichtelemente (44, 45) so aufweist, dass die Verbindungsleitungen (33, 34) bei einer bestimmungsgemäßen Montage des Ventilgehäuses (28) an einem Pleueldeckel (24) abdichtbar sind.

6. Umschaltventil nach einem der Ansprüche 2 bis 5, **dadurch gekennzeichnet, dass** zwischen den Verbindungsleitungen (33, 34) und dem Abgriffselement (27) jeweils eine Drosselstelle (58, 60), insbesondere eine Drosselbohrung, vorgesehen ist.

7. Umschaltventil nach einem der Ansprüche 2 bis 6, **dadurch gekennzeichnet, dass** die Ablaufleitungen (29, 30) einseitig mit einem Dichtelement (46, 47) abgedichtet sind, wobei insbesondere die Verbindungsleitungen (33, 34) bei über die jeweilige Durchgangsbohrung (31, 32) hergestellter Fluidverbindung über das jeweilige Dichtelement (46, 47) nach außen abgedichtet sind.

8. Umschaltventil nach einem der vorangegangenen Ansprüche, **dadurch gekennzeichnet, dass** das Abgriffselement (27) mittels einer Rastverbindung in den beiden Schaltstellungen (S1, S2) arretierbar ist, wobei insbesondere ein federbeaufschlagtes Rastelement (37) in den beiden Schaltstellungen (S1, S2) mit im Abgriffselement (27) ausgebildeten Rastnuten (38) zusammenwirkt.

9. Umschaltventil nach Anspruch 8, **dadurch gekennzeichnet, dass** das Rastelement (37) als Kugel ausgebildet ist, welche mittels einer Federkraft einer Feder (39) beaufschlagbar ist, wobei die Feder (39) nach bestimmungsgemäßer Montage des Ventilgehäuses (28) an einem Pleueldeckel (24) wenigstens teilweise in einer Ausnehmung (41) des Pleueldeckels (24) geführt vorgesehen ist.

10. Umschaltventil nach einem der vorangegangenen Ansprüche, **dadurch gekennzeichnet, dass** das Ventilgehäuse (28) eine axial begrenzte Nut (36) aufweist, in welcher ein Anschlagelement (35) des Abgriffselements (27) zur Begrenzung des Schaltweges angeordnet ist.

11. Umschaltventil nach einem der vorangegangenen Ansprüche, **dadurch gekennzeichnet, dass** die Hydraulikanschlüsse (52, 54) wenigstens teilweise durch Ausnehmungen (42, 43) gebildet sind, welche zur Aufnahme von Befestigungsschrauben zur bestimmungsgemäßen Befestigung des Ventilgehäuses (28) an einem Pleuel (1) vorgesehen sind.

12. Pleuel (1) für eine Brennkraftmaschine mit variabler Verdichtung mit einer Exzenter-Verstelleinrichtung (2) zur Verstellung einer effektiven Pleuelstangenlänge (50) und einem Umschaltventil (5) nach einem der vorangegangenen Ansprüche, **dadurch gekennzeichnet, dass** ein Verstellweg der Exzenter-Verstelleinrichtung (2) mittels des Umschaltventils (5) verstellbar ist.

13. Pleuel nach Anspruch 12, wobei die Exzenter-Verstelleinrichtung (2) wenigstens einen und vorzugsweise zwei Zylinder (12, 13) mit jeweils einem Kolben (6, 7) aufweist, der in einer Zylinderbohrung (10, 11) verschiebbar geführt und mit einer Stützstange (8, 9) verbunden ist, und wobei ein Zulauf (14, 15) zum Zuführen von Hydraulikflüssigkeit in die Zylinder (12, 13) sowie ein Ablauf (16, 17) zum Abführen von Hydraulikflüssigkeit von den Zylindern (12, 13) vorgesehen sind.

14. Pleuel nach einem der Ansprüche 12 oder 13, **dadurch gekennzeichnet, dass** über das Abgriffselement (27) in der ersten Schaltstellung (S1) der Ablauf (16) des ersten Zylinders (12) mit einem Hydraulikflüssigkeitskreislauf und in der zweiten Schaltstellung (S2) der Ablauf des zweiten Zylinders (13) mit dem Hydraulikflüssigkeitskreislauf verbunden ist.

15. Pleuel nach einem der Ansprüche 12 bis 14, **dadurch gekennzeichnet, dass** wenigstens auf einem Teil des Umfangs eines Hublagerauges (20) im Bereich des Pleueldeckels (24) eine erste Nut (25) zur hydraulischen Verbindung des Umschaltventils (5) mit dem Hydraulikflüssigkeitskreislauf und/oder im Bereich des Pleuelkörpers (23) eine zweite Nut (26) zur Versorgung des Zulaufs (14, 15) in die Zylinder (12, 13) mit Hydraulikflüssigkeit aus dem Hydraulikflüssigkeitskreislauf vorgesehen ist.

## Claims

1. Switching valve (5) for controlling a hydraulic liquid stream, having a pick-off element (27) which is arranged in a valve housing (28) and which is able to be displaced selectively into a first switching position (S1) or a second switching position (S2), wherein, in the first switching position (S1), a first hydraulic port (52) is connected to a supply port (56) and, in the second switching position (S2), a second hydraulic port (54) is connected to the supply port (56),
**characterized in that** there are provided in the pick-off element (27) at least two through bores (31, 32) which extend through the pick-off element (27), wherein, in the first switching position (S1), a fluidic connection is established between the first hydraulic port (52) and the supply port (56) by way of one of the through bores (31, 32) and, in the second switching position (S2), a fluidic connection is established between the second hydraulic port (54) and the supply port (56) by way of another of the through bores (31, 32) .

2. Switching valve according to Claim 1,
**characterized in that** at least two outflow lines (29, 30) and at least two connection lines (33, 34) are formed in the valve housing (28), wherein, in the first switching position (S1), the first outflow line (29) is able to be connected to the first connection line (33) via one of the through bores (31, 32) and, in the second switching position (S2), the second outflow line (30) is able to be connected to the second connection line (34) via another of the through bores (31, 32).

3. Switching valve according to Claim 1 or 2, **characterized in that** the through bores (31, 32) are arranged axially offset in the pick-off element (27) and extend diametrically through the pick-off element (27).

4. Switching valve according to one of the preceding claims, **characterized in that** the valve housing (28) is intended for arrangement on a connecting-rod cover (24) of a connecting rod (1) as an adaptor.

5. Switching valve according to one of Claims 2 to 4, **characterized in that** the valve housing (28) has sealing surfaces and/or sealing elements (44, 45) such that, when the valve housing (28) is fitted to a connecting-rod cover (24) as intended, the connection lines (33, 34) are able to be sealed off.

6. Switching valve according to one of Claims 2 to 5, **characterized in that** in each case one throttle point (58, 60), in particular one throttle bore, is provided between the connection lines (33, 34) and the pick-off element (27).

7. Switching valve according to one of Claims 2 to 6, **characterized in that** the outflow lines (29, 30) are sealed off on one side with a sealing element (46, 47), wherein, in particular, when a fluidic connection is established via the respective through bore (31, 32), the connection lines (33, 34) are sealed off with respect to the outside via the respective sealing element (46, 47).

8. Switching valve according to one of the preceding claims, **characterized in that** the pick-off element (27) is able to be locked in the two switching positions (S1, S2) by means of a detent connection, wherein, in particular, in the two switching positions (S1, S2), a spring-loaded detent element (37) interacts with detent grooves (38) formed in the pick-off element (27).

9. Switching valve according to Claim 8, **characterized in that** the detent element (37) is formed as a ball which is able to be loaded by means of a spring force of a spring (39), wherein, after the valve housing (28) has been fitted to a connecting-rod cover (24) as intended, the spring (39) is provided such that it is guided at least partially in a recess (41) of the connecting-rod cover (24).

10. Switching valve according to one of the preceding claims, **characterized in that** the valve housing (28) has an axially limited groove (36) in which a stop element (35) of the pick-off element (27) is arranged for limiting the switching travel.

11. Switching valve according to one of the preceding claims, **characterized in that** the hydraulic ports (52, 54) are formed at least partially by recesses (42, 43) which are provided for receiving fastening screws for fastening the valve housing, as intended, (28) to a connecting rod (1).

12. Connecting rod (1) for an internal combustion engine with variable compression, having an eccentric adjustment device (2) for adjusting an effective connecting-rod length (50) and having a switching valve (5) according to one of the preceding claims, **characterized in that** an adjustment travel of the eccentric adjustment device (2) is able to be adjusted by means of the switching valve (5).

13. Connecting rod according to Claim 12, wherein the eccentric adjustment device (2) has at least one, and preferably two, cylinders (12, 13) having in each case one piston (6, 7) which is guided in a displaceable manner in a cylinder bore (10, 11) and which is connected to a support rod (8, 9), and wherein an inflow (14, 15) for the feeding of hydraulic liquid into the cylinders (12, 13) and an outflow (16, 17) for the discharge of hydraulic liquid from the cylinders (12, 13) are provided.

14. Connecting rod according to either of Claims 12 and 13, **characterized in that**, via the pick-off element (27), in the first switching position (S1), the outflow (16) of the first cylinder (12) is connected to a hydraulic liquid circuit and, in the second switching position (S2), the outflow of the second cylinder (13) is connected to the hydraulic liquid circuit.

15. Connecting rod according to one of Claims 12 to 14, **characterized in that**, at least on one part of the circumference of a pin bearing eye (20), there is provided in the region of the connecting-rod cover (24) a first groove (25) for the hydraulic connection of the switching valve (5) to the hydraulic liquid circuit, and/or in the region of the connecting-rod body (23) a second groove (26) for the supply of the inflow (14, 15) into the cylinders (12, 13) with hydraulic liquid from the hydraulic liquid circuit.

## Revendications

1. Soupape de commutation (5) destinée a commander un flux de liquide hydraulique, comprenant un élément de prélèvement (27) qui est disposé dans un boîtier de soupape (28) et qui peut être déplacé de manière sélective dans une première position de commutation (S1) ou une deuxième position de commutation (S2), un premier raccord hydraulique (52) étant raccordé a un raccord d'alimentation (56) dans la première position de commutation (S1) et un deuxième raccord hydraulique (54) étant raccordé au raccord d'alimentation (56) dans la deuxième position de commutation (S2), **caractérisée en ce qu'**au moins deux alésages de passage (31, 32) sont prévus dans l'élément de prélèvement (27), lesquels s'étendent a travers l'élément de prélèvement (27), une liaison fluidique entre le premier raccord hydraulique (52) et le raccord d'alimentation (56) étant établie dans la première position de commutation (S1) à travers l'un des alésages de passage (31, 32) et une liaison fluidique entre le deuxième raccord hydraulique (54) et le raccord d'alimentation (56) étant établie dans la deuxième position de commutation (S2) a travers un autre des alésages de passage (31, 32).

2. Soupape de commutation selon la revendication 1, **caractérisée en ce qu'**au moins deux conduites d'écoulement (29, 30) ainsi qu'au moins deux conduites de liaison (33, 34) sont réalisées dans le boîtier de soupape (28), la première conduite d'écoulement (29) pouvant être connectée par le biais de l'un des alésages de passage (31, 32) à la première conduite de liaison (33) dans la premiere position de commutation (S1) et la deuxième conduite d'écoulement (30) pouvant être connectée par le biais d'un autre des alésages de passage (31, 32) a la deuxième conduite de liaison (34) dans la deuxième position de commutation (S2) .

3. Soupape de commutation selon la revendication 1 ou 2, **caractérisée en ce que** les alésages de passage (31, 32) sont disposés de manière décalée axialement dans l'élément de prélèvement (27) et s'étendent diamétralement a travers l'élément de préhension (27).

4. Soupape de commutation selon l'une quelconque des revendications précédentes, **caractérisée en ce que** le boîtier de soupape (28) est prévu, en tant qu'adaptateur, de manière conforme aux prescriptions en vue d'un agencement sur un chapeau de bielle (24) d'une bielle (1).

5. Soupape de commutation selon l'une quelconque des revendications 2 à 4, **caractérisée en ce que** le boîtier de soupape (28) présente des surfaces d'étanchéité et/ou des éléments d'étanchéité (44, 45) de telle sorte que les conduites de liaison (33, 34) puissent être étanchéifiées lors d'un montage conforme aux prescriptions du boîtier de soupape (28) sur un chapeau de bielle (24).

6. Soupape de commutation selon l'une quelconque des revendications 2 à 5, **caractérisée en ce qu'**une zone d'étranglement (58, 60), en particulier un alésage d'étranglement, est prévu(e) entre les conduites de liaison (33, 34) et l'élément de prélèvement (27).

7. Soupape de commutation selon l'une quelconque des revendications 2 à 6, **caractérisée en ce que** les conduites d'écoulement (29, 30) sont étanchéifiées d'un côté avec un élément d'étanchéité (46, 47), les conduites de liaison (33, 34) étant notamment étanchéifiées vers l'extérieur lors de l'établissement d'une connexion fluidique par le biais de l'alésage de passage respectif (31, 32) par le biais de l'élément d'étanchéité respectif (46, 47).

8. Soupape de commutation selon l'une quelconque des revendications précédentes, **caractérisée en ce que** l'élément de prélèvement (27) peut être bloqué au moyen d'une connexion par encliquetage dans les deux positions de commutation (S1, S2), un élément d'encliquetage sollicité par ressort (37) coopérant notamment dans les deux positions de commutation (S1, S2) avec des rainures d'encliquetage (38) réalisées dans l'élément de prélèvement (27).

9. Soupape de commutation selon la revendication 8, **caractérisée en ce que** l'élément d'encliquetage (37) est réalisé sous forme de bille qui peut être sollicitée au moyen d'une force de ressort d'un ressort (39), le ressort (39), lors d'un montage conforme aux prescriptions du boîtier de soupape (28) sur un chapeau de bielle (24), étant prévu de manière guidée au moins en partie dans un évidement (41) du chapeau de bielle (24).

10. Soupape de commutation selon l'une quelconque des revendications précédentes, **caractérisée en ce que** le boîtier de soupape (28) présente une rainure limitée axialement (36) dans laquelle est disposé un élément de butée (35) de l'élément de prélèvement (27) pour limiter la course de commutation.

11. Soupape de commutation selon l'une quelconque des revendications précédentes, **caractérisée en ce que** les raccords hydrauliques (52, 54) sont formes au moins en partie par des évidements (42, 43), lesquels sont prévus pour recevoir des vis de fixation pour la fixation conforme aux prescriptions du boîtier de soupape (28) sur une bielle (1).

12. Bielle (1) pour un moteur à combustion interne avec compression variable comprenant un dispositif de réglage a excentrique (2) pour régler une longueur effective d'une tige de bielle (50) et une soupape de commutation (5) selon l'une quelconque des revendications précédentes, **caractérisée en ce qu'**une course de réglage du dispositif de réglage a excentrique (2) peut être réglée au moyen de la soupape de commutation (5).

13. Bielle selon la revendication 12, dans laquelle le dispositif de réglage à excentrique (2) présente au moins un, et de préférence deux, cylindres (12, 13) ayant chacun un piston (6, 7) qui est guidé de manière déplaçable dans un alésage de cylindre (10, 11) et qui est connecté a une tige de support (8, 9), et dans lequel une alimentation (14, 15) pour l'alimentation en liquide hydraulique aux cylindres (12, 13) ainsi qu'une sortie (16, 17) pour l'évacuation du liquide hydraulique hors des cylindres (12, 13) sont prévues.

14. Bielle selon l'une quelconque des revendications 12 ou 13, **caractérisée en ce que** par le biais de l'élément de prélèvement (27), dans la premiere position de commutation (S1), la sortie (16) du premier cylindre (12) est connectée a un circuit de liquide hydraulique et dans la deuxième position de commutation (S2), la sortie du deuxième cylindre (13) est connectée au circuit de liquide hydraulique.

15. Bielle selon l'une quelconque des revendications 12 à 14, **caractérisée en ce qu'**au moins sur une partie de la périphérie d'un ceil de palier de course (20) dans la region du chapeau de bielle (24), une première rainure (25) est prévue pour la liaison hydraulique de la soupape de commutation (5) au circuit de liquide hydraulique et/ ou dans la region du corps de bielle (23), une deuxième rainure (26) est prévue pour l'alimentation de l'alimentation (14, 15) en liquide hydraulique provenant du circuit de liquide hydraulique dans les cylindres (12, 13).
